# EUROPEAN PATENT SPECIFICATION

(11) **EP 0 476 612 B1**
(45) Date of publication and mention of the grant of the patent: **03.12.1997**
(21) Application number: 91115839.2
(22) Date of filing: 18.09.1991
(51) Int. Cl.: G03C 1/685, G03C 1/73, C09K 9/02

(54) **Stabilizing mixture for compounds having photochromatic activity**
Stabilisierungsgemisch für Verbindungen mit photochromatischer Aktivität
Mélange stabilisant pour composés ayant une activité photochromatique

(30) Priority: 18.09.1990 IT 2150290
(43) Date of publication of application: 25.03.1992
(73) Proprietor: GREAT LAKES CHEMICAL ITALIA S.r.l., I-20138 Milano (IT)
(72) Inventor: Malatesta, Vincenzo, Dr., I-20093 Cologno Monzese, Milan (IT); Allegrini, Pietro, Dr., I-20097 San Donato Milanese, Milan (IT); Crisci, Luciana, Dr., I-20079 Sant'Angelo Lodigiano,Milan (IT)
(74) Representative: Weinhold, Peter, Dr.

(56) References cited:
- EP-A- 0 382 294
- FR-A- 2 205 682
- US-A- 4 720 356
- PATENT ABSTRACTS OF JAPAN vol. 14, no. 189 (P-1037)(4132) 17 April 1990
- H.G.O. BECKER, "Einführung in die Photochemie", 2nd ed., 1983, Georg Thieme Verlag, Stuttgart/New York; p. 423

## Description

The present invention relates to stabilizing mixtures for compounds having photochromatic activity, which mixtures ensure an exceptionally long-lasting activity of the corresponding photochromatic compositions. The present invention also relates to said photochromatic compositions as well as to articles (products) which are photochromatic due to the presence of said compositions therein.

Photochromatic compounds are substances which are capable of reversibly changing colour and/or the degree of light transmission when exposed to certain types of electromagnetic radiation and solar light, returning again to their initial state of colour and light transmission after the removal of the source of radiation.

There are many known substances which have photochromatic characteristics and which belong to different classes of both organic and inorganic compounds, as described, e.g., in "Photochromism", G.H. Brown (Ed.), Vol.32 of the Weissberger series "Techniques of Organic Chemistry", Wiley Interscience, N.Y. (1971).

Among the relatively well-known organic photochromatic compounds are the spiro-indoline-oxazines and spiro-indolinepyranes, which compounds can impart photochromatic characteristics to polymer systems for paints, inks and adhesives, as well as to polymerized organic materials used for sun filters, optical instruments, optical memories, printing, photography, fabrics, decorating articles and toys as described, e.g., in US-A-3,562,172, 3,578,602, 4,215,010 and 4,342,668 and in EP-A-134,633 and 141,407. JP-A-02035442 discloses photochromic photosensitive material composed of a photosensitive composite having a spirooxazine compound and a high molecular substance as its main ingredients. 1,4-Diazabicyclo-[2.2.2]octane (DABCO) and its derivatives may be incorporated in the photosensitive composite. According to the art, a photochromatic compound can be deposited on an article by means of impregnation or thermal transfer, as specified in US-A-4,286,957.

It also is possible to apply the photochromatic compound dispersed in a paint spread over the surface of the article which is to become photochromatic. These methods of surface application, at times, allow articles to conserve their photochromatic characteristics only for limited periods of time.

The introduction of a photochromatic compound into the mass of an article, especially when the latter is made of thermoplastic material can, on the other hand, create problems to which no satisfactory solution has yet been found. Thermoplastic materials are transformed into finished articles by the usual techniques of moulding, extrusion and the like. Under the conditions (especially of temperature) under which these processes are carried out, the organic photochromatic compounds are likely to undergo degradation or at least degeneration, accompanied by an irreversible development of an undesirable colouring.

In addition, it is also known that organic photochromatic compounds incorporated in polymer matrices or in solutions, undergo rapid degradation, losing their photochromatic activity due to exposure to light under normal conditions of use.

A solution to these problems has been offered by the Applicant through a procedure which, as described in IT-A-21098/88 and 19407/89, comprises the mixing, either before or during the processing phase of the thermoplastic organic polymers, of an organic photochromatic compound with, respectively, a basic organic compound which contains nitrogen, selected from non-cyclic or cyclic non-aromatic amines, amidines and guanidines, or sterically hindered amines containing silicon in their molecule.

There are also known photochromatic compositions (US-A-4,720,356) which are fatigue resistant under light and which include a spirooxazine combined with a sterically hindered amine, selected from those normally used for the stabilization or organic polymers to ultraviolet light.

The stabilization of photochromatic activity imparted by the above-mentioned substances is not ensured, however, for more than a limited, and sometimes not sufficient, period of time, whereafter this activity decreases, even dramatically, making the preparation of photochromatic compositions and corresponding articles and manufactured goods, unreasonably expensive.

It has now surprisingly been found that it is possible to prolong the photochromatic activity of photochromatic substances of interest, beyond any expected limit of the stabilizing effect of the above-mentioned compounds, by adding to one or more of said photochromatic substances a stabilizing mixture comprising (a) at least one cyclic amine selected from 1,4-diazabicyclo-[2.2.2] octane (hereinafter referred to as DABCO), quinuclidine and derivatives of said compounds and (b) at least one sterically hindered amine (hereinafter referred to as HALS). This mixture stabilizes the photochromatic characteristics of the substance to which it has been added for a much longer period than would be expected from the contributions of the individual additives, in such a way that the loss of photochromatic activity occurs after a period which is at least several times longer than that observed with a product which does not contain one of the above cyclic amines.

Accordingly the present invention provides a mixture which stabilizes the photochromatic activity of compounds possessing said activity, comprising (a) a cyclic amine selected from 1,4-diazabicyclo-[2.2.2] octane (DABCO), quinuclidine and derivatives thereof and (b) at least one sterically hindered amine.

The present invention also provides a fatigue resistant (under light) photochromatic composition with prolonged activity, comprising at least one photochromatic compound combined with the above mixture.

In the above composition the weight ratio of mixture of stabilizers to photochromatic compound(s) preferably ranges from 0.5:1 to 50:1, particularly from 2:1 to 25:1, whereas in the above mixture of stabilizers, the weight ration of cyclic amine (a) to sterically hindered amine (b) usually ranges from 20:1 to 0.5:1, preferably from 10:1 to 1:1.

An additional subject of the present invention is a polymeric composition which comprises:
(i) at least one organic polymer;
(ii) at least one photochromatic compound;
(iii) a mixture of stabilizers as defined above;
in which component (ii) is preferably present in amounts of from 0.01 to 3 parts by weight per 100 parts by weight of component (i) and component (iii) is present in the above specified weight ratio with respect to component (ii).

Examples of useful organic polymers are polyolefins such as polyethylene (low and high density as well as linear low density) and polypropylene; polyvinylchloride; plasticized polyvinylchloride; ethylene-vinylacetate (EVA) copolymers; polyvinylacetate; polyvinyl butyral; cellulose acetate; cellulose butyrate; (meth)acrylic resins; polystyrene; polycarbonate; (preferably linear) polyamides and linear polyesters (such as polyethylene terephthalate and polybutylene terephthalate); polyurethanes; and thermosetting polymers derived from poly(allyl carbonates) of polyols.

The stabilizing mixture according to the present invention can be used for any compound having a certain photochromatic activity.

Examples of organic photochromatic compounds which can be used as component (ii) of the above composition are spirooxazines and spiropyranes. Spirooxazines may be represented by the following general formula (A): 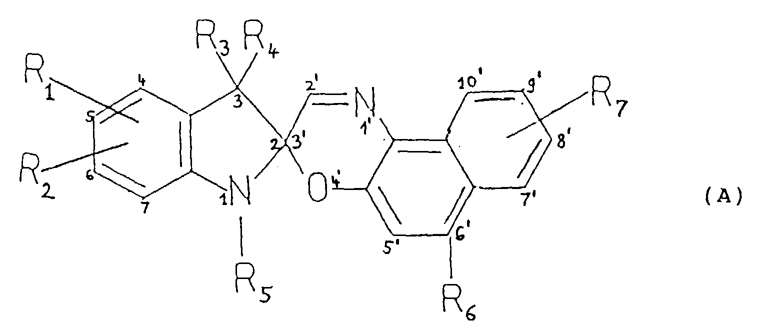 wherein:
R₁ and R₂ independently represent hydrogen, halogen (fluorine, chlorine and bromine) or a group selected from linear or branched C₁-C₅ alkyl or haloalkyl, C₁-C₅ alkoxy, nitro, cyano,carboxyl, carboxyalkyl and carbonyl; R₃ and R₄ independently represent linear or branched C₁-C₅ alkyl, phenyl or benzyl; or R₃ and R₄ together with the carbon atom to which they are bound, form a C₅-C₈ cycloalkyl group; R₅ represents linear or branched C₁-C₅ alkyl, alkylphenyl, benzyl or allyl alkoxy; R₆ represents hydrogen, linear or branched C₁-C₅ alkyl or -NR₈R₉, R₈ being linear or branched C₁-C₅ alkyl, phenyl or benzyl and R₉ being hydrogen or having the same meaning as R₈, or R₈ and R₉, together with the nitrogen atom to which they are linked, forming a cyclic structure with from 5 to 12 members, optionally containing an additional heteroatom selected from oxygen and nitrogen; R₇ represents hydrogen, halogen (fluorine, chlorine or bromine) or a group selected from linear or branched C₁-C₅ alkyl, cyano thioalkyl, ester carboxylate with 1 to 3 carbon atoms in the ester portion, or forms an aromatic or condensed heterocyclic nucleus in one of the positions 7', 8', 9' or 10' with the CH group which can be substituted by N.

In particular, the groups R₁ and R₂, if different from hydrogen, can be connected to any of the positions 4, 5, 6 and 7 of the indolinic part of the molecule. Moreover, the group R₇, when different from hydrogen and an aromatic or condensed heterocyclic nucleus, can be present in any of the positions 7', 8', 9' and 10' of the naphthenic part of the molecule.

It is preferable to use photochromatic compounds corresponding to general formula (A) in which R₁ and R₂ independently represent hydrogen or methyl; R₃ and R₄ both represent methyl or together with the carbon atom to which they are bound represent a cyclohexyl group; R₅ is methyl; R₆ is hydrogen or -NR₈R₉, the groups R₈ and R₉, together with the nitrogen atom to which they are connected, forming a structure having a piperidine, morpholine, pyrrolidine or hexamethyleneimine nucleus; and R₇ is hydrogen or methoxy.

Examples of preferred photochromatic spirooxazines suitable for the purposes of the present invention are 1,3,3,4,5- and 1,3,3,5,6-pentamethylspiro(indoline-2,3'-(3H)-naphtho-(2,1-b)-(1,4)-oxazine); 1,3,3-trimethylspiro(indoline-2,3'-(3H)naphtho-(2,1-b)-(1,4)-oxazine); 1,3,3-trimethylspiro(indoline-6'-(1-piperidine)-2,3-(3H)naphtho-(2,1-b)-(1,4)-oxazine); 1,3,3-trimethylspiro(indoline-6'-(1-morpholine)-2,3'-(3H)-naphtho-(2,1-b)-(1,4)-oxazine); 1,3,3,4,5- and 1,3,3,5,6-pentamethylspiro(indoline-6'-(1-piperidine)-2,3'-(3H)-naphtho-(2,1-b)-1,4)-oxazine); and 1,3,3-trimethylspiro(indoline-6'-(1-piperidine)-9'-(methoxy)-2,3'-(3H)-naphtho(2,1-b)-(1,4)-oxazine). Examples of photochromatic spiropyranes are those represented by the following general formulae (B) to (E):

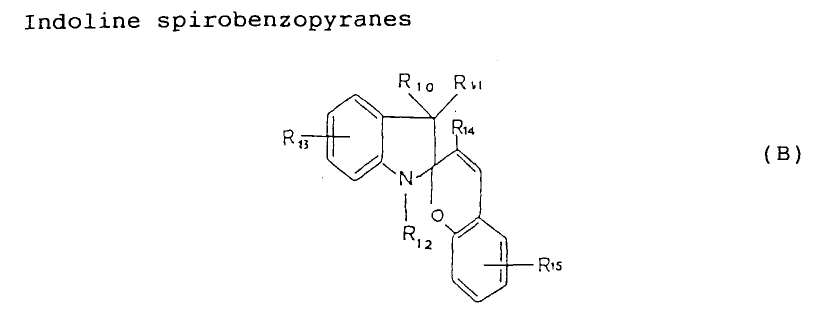

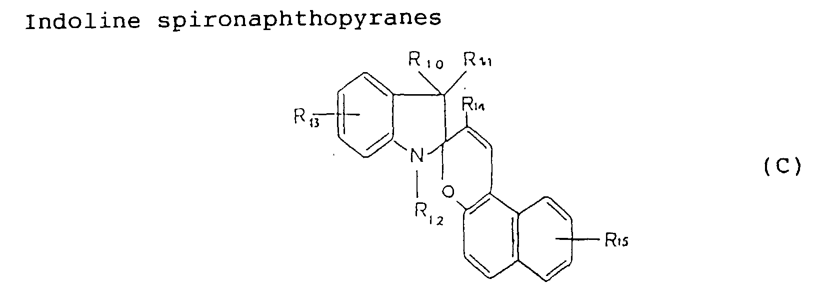

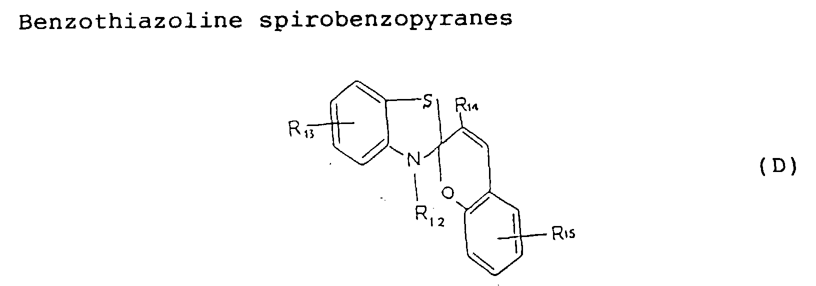

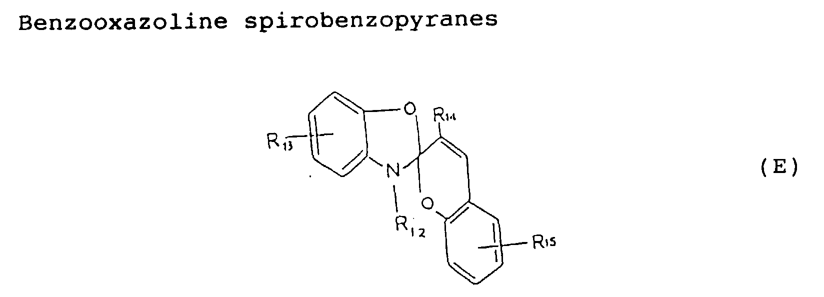

In the above formulae R₁₀ and R₁₁ represent alkyl or aryl; R₁₂ represents alkyl, aryl, benzyl aryl or substituted alkyl (such as hydroxylalkyl, haloalkyl, carbalkoxyalkyl, alkoxyalkyl, aminoalkyl); R₁₄ represents hydrogen, alkyl, aryl or alkoxy; R₁₃ and R₁₅ represent hydrogen or optionally mono- or polysubstituted alkyl groups, halogen, nitro, alkoxy, cyano, carboxyl, carboxyalkyl and carbonyl.

It is also possible to use photochromatic spiro-indolino-oxazines as described in IT-A-22660/89 and defined by general formula (I): 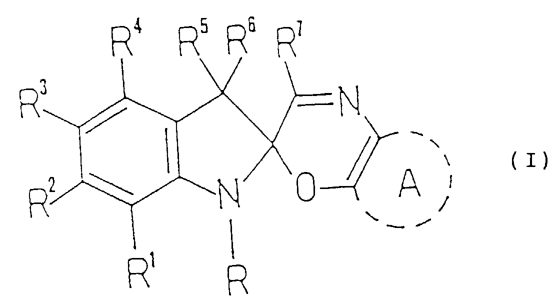 wherein:
- R represents hydrogen; linear or branched C₁-C₅ alkyl, optionally substituted with from 1 to 5 groups selected from halogen (fluorine, chlorine, bromine and iodine), hydroxy, C₁-C₅ alkoxy, C₁-C₅ carboxyalkyl and cyano; C₂-C₅ alkenyl; phenyl; or benzyl;
- the groups R₁ to R₄, the same or different from each other, represent hydrogen; linear or branched C₁-C₅ alkyl, optionally substituted with from 1 to 5 groups selected from halogen (fluorine, chlorine, bromine and iodine), hydroxy, C₁-C₅ alkoxy, C₁-C₅ carboxyalkyl and cyano; C₂-C₅ alkenyl; benzyl; halogen (fluorine, chlorine, bromine or iodine); hydroxy; C₁-C₅ alkoxy; amino; mono-(C₁-C₅)alkyl amino; di-(C₁-C₅)alkyl amino; (C₃-C₁₀)cyclo-alkyl amino; piperidinyl; piperazinyl; morpholyl; carboxyl; carboxy(C₁-C₅)alkyl; carboxy(C₁-C₅)alkenyl; carboxyamido, optionally N-substituted with one or two (C₁-C₅)alkyl groups; cyano; nitro; a sulfonic group; a (C₁-C₅) alkyl sulfonic group; a benzene sulfonic, p-toluene sulfonic or p-chlorotoluene sulfonic group; phenyl; biphenylyl or naphthyl;
- R₅ and R₆, the same or different from each other, represent linear or branched (C₁-C₅) alkyl; phenyl; or R₅ and R₆, together with the carbon atom to which they are connected, represent (C₄-C₇) cycloalkyl;
- R₇ represents hydrogen; linear or branched (C₁-C₅) alkyl; phenyl; halogen (fluorine, chlorine or bromine); (C₁-C₅) alkoxy; or phenoxy;
- A is an arenic, monocyclic or polycyclic group, containing at least one carbonylic function (C=0) on the nucleus or in the side chain, said group being selected from those which can be represented by the following general formulae (II), (III), (IV), (V) and (VI): 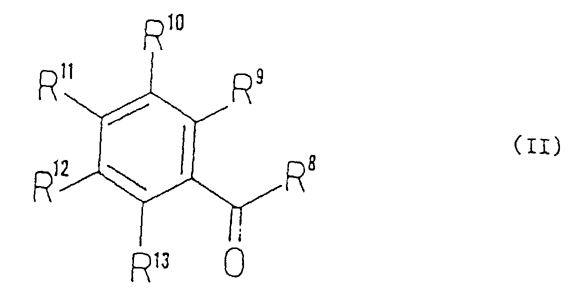 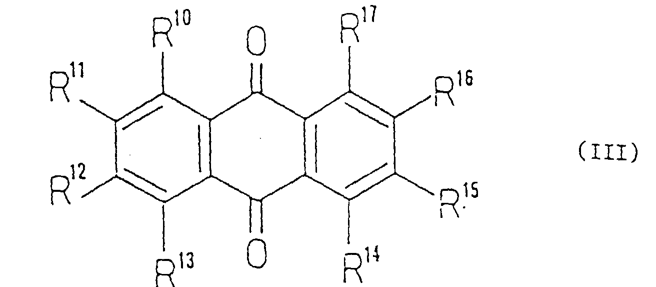 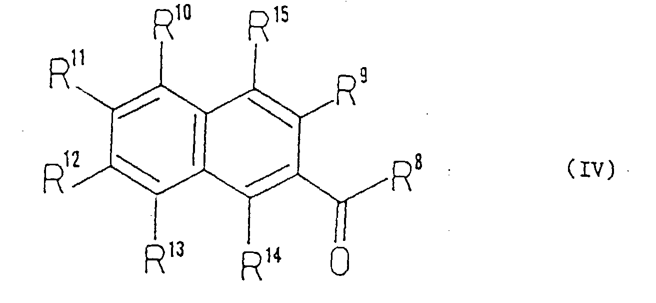 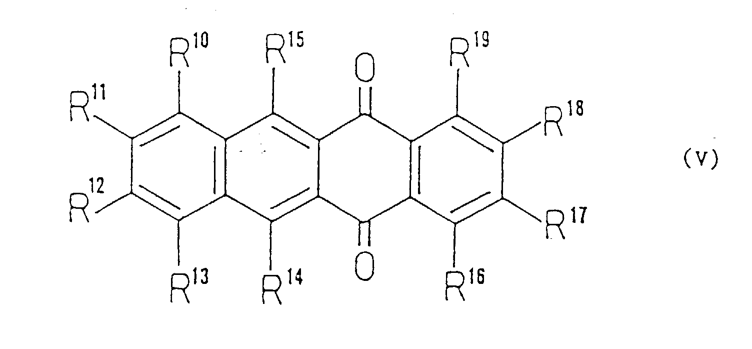 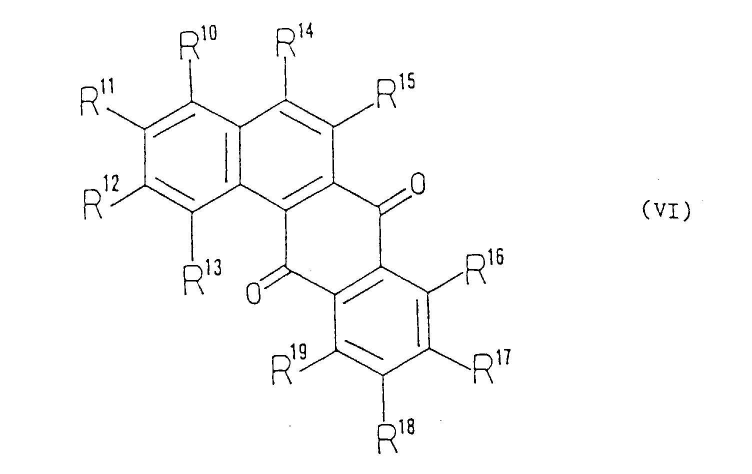
wherein:
- R₈ represents hydrogen; chlorine; bromine; linear or branched (C₁-C₅) alkyl; (C₂-C₅) alkenyl; and aryl groups selected from phenyl, naphthyl, anthracyl, furanyl, pyrrolyl, thienyl, quinolyl and pyrrolyl, said aryl groups being optionally substituted with from 1 to 4 groups selected from halogen (fluorine, chlorine or bromine), linear or branched (C₁-C₅) alkyl, hydroxy, (C₁-C₅) alkoxy, nitro, cyano, amino, mono-(C₁-C₅)alkyl amino, di-(C₁-C₅)alkyl amino, piperidyl, piperazyl or morpholyl;
- two adjacent groups out of R₁₀ to R₁₃ represent the condensation position with the oxazine nucleus in general formula (I) and the others have the same meaning as the groups R₁ to R₄;
- R₉ and the groups R₁₄ to R₁₉ have the same meaning as the groups R₁ to R₄.

Preferably, in formula (I):
- R represents methyl, ethyl, benzyl, 2-allyl, 2-hydroxyethyl or 2-carboxymethylethyl;
- the groups R₁ to R₄, the same or different from each other, represent hydrogen,fluorine, chlorine, bromine, methyl, isopropyl, trifluoromethyl, hydroxymethyl, benzyl, hydroxy, methoxy, amino, piperidino, morpholino, carboxyl, carboxymethyl, N,N-dimethylcarboxamido, cyano, nitro or phenyl;
- R₅ and R₆, the same or different from each other, represent methyl or phenyl or, together with the carbon atom to which they are connected, represent cyclohexyl;
- R₇ represents hydrogen, chlorine, phenyl, methyl or methoxy;
- A is one of the groups of formulae (II) to (VI) wherein:
- R₈ represents hydrogen, methyl, isopropyl, phenyl, p-N,N-dimethylamino phenyl, p-cyanophenyl, p-nitrophenyl, p-methoxyphenyl, naphthyl, 2-thienyl, 2-furanyl or 4-pyridyl;
- two adjacent groups out of R₁₀ to R₁₃ represent the condensation position with the oxazine nucleus in general formula (I) and the others each independently represent hydrogen,fluorine, chlorine, bromine, methyl, isopropyl, trifluoromethyl, hydroxymethyl, benzyl, hydroxy, methoxy, amino, piperidino, morpholino, carboxyl, carboxymethyl, N,N-dimethylcarboxamido, cyano, nitro or phenyl;
- R₉ and R₁₄ to R₁₉ each independently represent hydrogen, fluorine, chlorine, bromine, methyl, isopropyl, trifluoromethyl, hydroxymethyl, benzyl, hydroxy, methoxy, amino, piperidino, morpholino, carboxyl, carboxymethyl, N,N-dimethylcarboxamido, cyano, nitro or phenyl.

Specific examples of preferred photochromatic compounds for the purposes of the present invention are:
- 1,3,3-trimethyl-8'-oxyphenyl-spiro-indolino-2,3'-(3H)-naphtho-(2,1-b)-1,4-oxazine (IA);
- 1,1,1-trimethyl-spiro-indolino-2,3'-(3H)-benzo(a)anthracen-7', 12-dione-(3,4-b)-1,4-oxazine (IB); and
- 1,3,3-trimethyl-8'-oxyphenyl-6'-piperidyl-spiro-indolino-2,3'-(3H)-naphtho-(2,1-b)-1,4-oxazine (IC).

It is also possible to use the photochromatic spiro-oxazepinoxazines described in IT-A-22659/89 and definable by general formula (VII): 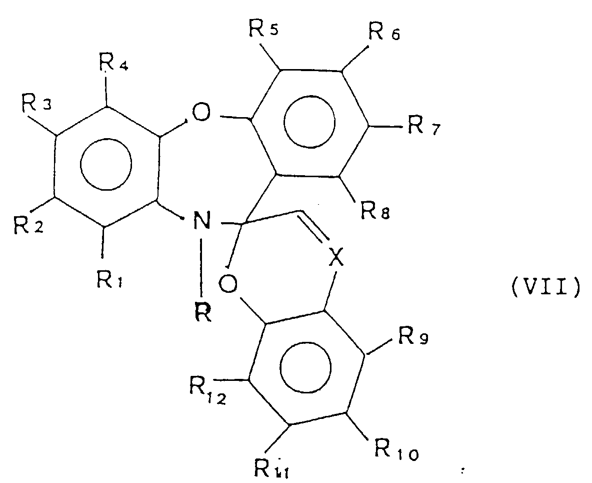 wherein:
X represents N or CH; R represents hydrogen; linear or branched (C₁-C₅) alkyl, optionally substituted with from 1 to 5 halogen atoms (fluorine, chlorine, bromine or iodine); (C₁-C₅) alkoxy; carboxy (C₁-C₅) alkyl; cyano; (C₂-C₅) alkenyl; phenyl; or benzyl;
the groups R₁ to R₁₂, the same or different from each other, represent hydrogen; linear or branched (C₁-C₅) alkyl; (C₂-C₅) alkenyl; benzyl; halogen (fluorine, chlorine, bromine or iodine); hydroxy; (C₁-C₅) alkoxy; amino; mono-(C₁-C₅) alkyl amino; di-(C₁-C₅) alkyl amino; cyclo-(C₃-C₇) alkyl amino; carboxyl; carboxy-(C₁-C₅) alkyl; carboxamido, optionally N-substituted with one or two (C₁-C₅) alkyl groups; cyano; nitro; or two adjacent groups out of R₉, R₁₀, R₁₁ and R₁₂ represent a condensed benzenic nucleus which optionally has from 1 to 3 substituents selected from the groups given as meanings for R₁ to R₁₂.

Preferably, in formula (VII) R represents hydrogen or methyl; the groups R₁ to R₈ each independently represent hydrogen or methyl; the groups R₉ to R₁₂ each independently represent hydrogen, methoxy or nitro; or two adjacent groups represent a condensed benzenic nucleus without any substituents or carrying from 1 to 3 substituents selected from methoxy, nitro and carboxymethyl.

Specific examples of preferred photochromatic compounds of formula (VII) are:
- 10-methyl-spiro-dibenzo(b,f)-1,4-oxazepin-11,3'-(11h)naphtho-(2,1-b)-(1,4)-oxazine.
- 10-methyl-8'-methoxy-6'-nitro-spiro-dibenzo(b,f)-1,4-oxazepin-11,2'-(11h)benzo(2,1-b)-(3H)pyrane;
- 10-methyl-8'-methoxy-spiro-dibenzo(b,f)-1,4-oxazepin-11,3'-(11h)naphtho(2,1-b)-(1,4)-oxazine; and
- methylic acid ester 10-methyl spiro dibenzo(b,f)-1,4-.

As already mentioned above, the mixture of stabilizing additives according to the present invention contains one or more cyclic amines selected from DABCO, quinuclidine and derivatives of said amines and at least one sterically hindered amine.

One type of suitable sterically hindered amine can be represented by general formula (VIII): 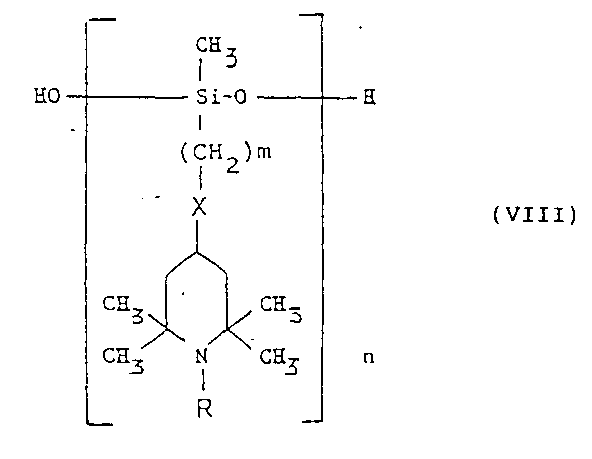 in which R is hydrogen or methyl, X is oxygen or NH, m ranges from 2 to 10 and the average value of n ranges from 1 to 100.

A prefereed compound is that wherein X is oxygen, m is 3, R is methyl and n has an average value of 8.

Amines of formula (VIII) are described in IT-A-21935/86.

The stabilizing effect described above can also be obtained by substituting the sterically hindered amine of formula (VIII) with other types of hindered amines; accordingly those corresponding to general formula (IX) may also be used to advantage: 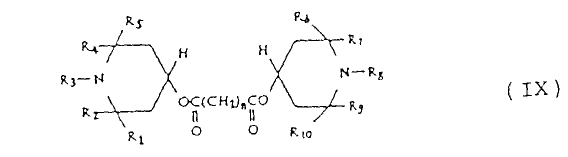 in which R₁ to R₁₀ independently represent lower alkyl and R₃ and R₈ can additionally be hydrogen; and n ranges from 1 to 12.

(As defined herein, "lower alkyl" is to denote an alkyl group having 1 to 6, preferably 1 to 4 carbon atoms).

Alternatively, hindered amines of general formula (X) may be used: 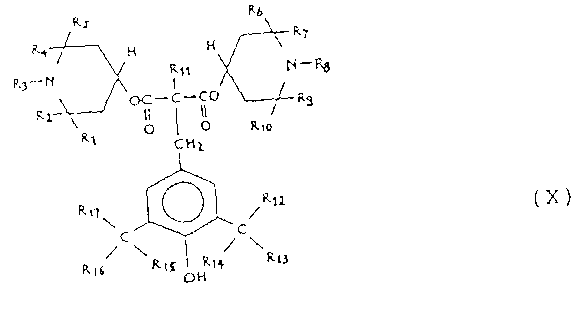 in which R₁ to R₁₇ independently represent lower alkyl and R₃ and R₈ can additionally represent hydrogen.

Other suitable hindered amines are those of general formula (XI): 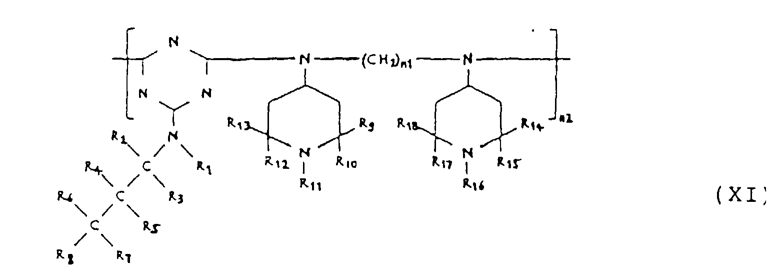 wherein R₁ to R₁₈ independently represent lower alkyl and R₁, R₄, R₅, R₁₁ and R₁₆ can also be hydrogen; n₁ ranges from 1 to 12 and the average value of n₂ is from 1 to 15.

Hindered amines of general formula (XII) can also be used: 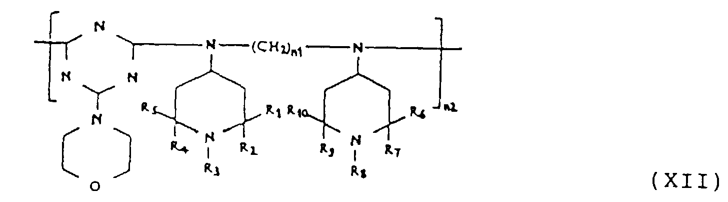 wherein R₁ to R₁₀ independently represent lower alkyl and R₃ and R₈ may also be hydrogen; n₁ ranges from 1 to 12 and the average value of n₂ is 1 to 15.

Finally, other suitable hindered amines are those of general formula (XIII): 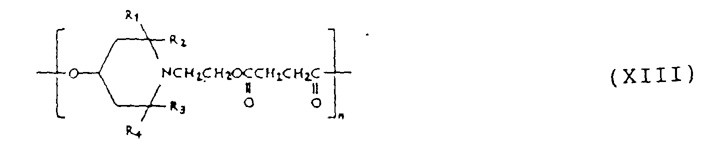 in which R₁, R₂, R₃ and R₄ independently represent lower alkyl and the average value of n ranges from 1 to 15.

Among the amines of general formula (VIII), it is particularly advantageous to use those in which m is 3 and R represents hydrogen.

Among the amines of general formula (IX), the following specific examples may be mentioned: bis(2,2,6,6-tetramethyl-4-piperidyl)sebacate (also known as Tinuvin® 770) and bis(1,2,2,6,6-pentamethyl-4-piperidyl)sebacate (also known as Tinuvin® 765), both being marketed by Ciba-Geigy.

Among the amines of general formula (X), di-(1,2,2,6,6-pentamethyl-4-piperidyl)-butyl-(3',5'-di-tert-butyl-4-hydroxybenzyl)-malonate, better known under the trade-name Tinuvin® 144 (Ciba-Geigy), is of particular interest.

As far as the compounds of general formula (XI) are concerned, attention is to be directed to the product known as Chimossarb® 924 (Ciba-Geigy), which is poly {[(6-(1,1,3,3-tetramethylbutyl)amine]-1,3,5-triazine-2,4-diyl}-[6-(2,2,6,6-tetramethyl-4 -piperidinyl)amino-hexamethylene].

With respect to the amines of formulae (XI) and (XIII), specific examples thereof are poly[6-(morpholino)-s-triazine-2,4-diyl]-[1,6-(2,2,6,6-tetramethyl-4-piperidyl)amino]hexamethylene, known as Cyasorb® 3346 (American Cyanamide) and Tinuvin® 622 (Ciba-Geigy) which is the dimethylsuccinic ester of 4-hydroxy-2,2,6,6-tetramethyl-1-piperidylethanol.

The use of compounds of general formulae (VIII) and (XIII) as stabilizers for photochromatic materials has already been described in the above mentioned US-A-4,720,356.

Regarding the fields of application, the photochromatic composition of the present invention can suitably be used for paints, inks, adhesives, fibres, fabrics, etc.

More specifically, the photochromatic articles made of plastic, containing the polymeric composition of the present invention (i.e. the mixture of components (i) to (iii)), are obtained by the heat processing of the mixture of the corresponding components; this mixture can be prepared using conventional techniques such as dry mixing, with or without a wetting agent, or by mixing with a volatile solvent and homogenizing with apparatus such as Banbury mixers, calenders, etc.

These mixtures may additionally contain other components, common in the field of thermoplastics, such as inert fillers, plasticizers, pigments, lubricants, antistatic agents, slipping agents, antiblocking agents, etc.

The mixtures of components (i), (ii) and (iii), optionally containing one or more additives (e.g. those already mentioned), may be transformed into finished products by means of heat processing.

For this purpose, melt processing techniques such as extrusion, spinning, compression moulding, injection moulding, blow moulding, calendering, or reaction injection moulding (RIM), and other techniques which are normally carried out within a temperature range of about 100°C to about 300°C may be used.

In this way, products such as films, fibres, bands, slabs, moulded articles, containers, protective filters, technical articles, transparent sheets of glass, optical instruments, toys and fabrics which show no signs of degradation of the photochromatic compound and which are capable of maintaining their photochromatic characteristics for extremely long periods of time are obtained.

The following examples are to further illustrate the present invention.

In these examples use is made of the following photochromatic compounds (component (ii)):
(A) 1,3,3-trimethyl-spiro(indolino-6'-(1-piperidine)-2-3'-(3H)-naphtho-(2,1-b)-(1,4)-oxazine) of formula: 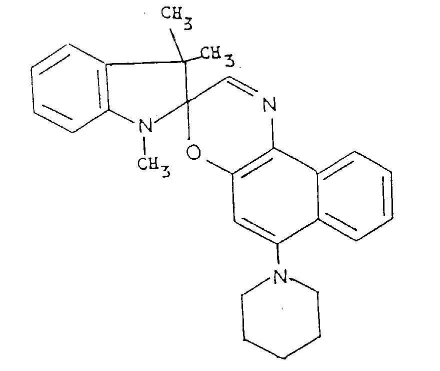
(B) 1,3,3-trimethyl-spiro(indolino-2,3'-(3H)-naphtho-(2,1-b)-(1,4)-oxazine) of formula: 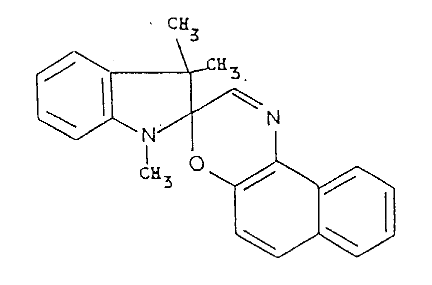
(C) 1,3,3,4,5- and 1,3,3,5,6-pentamethyl-spiro(indolino-2,3'-(3H)-naphtho-(2,1-b)-(1,4)-oxazine) of formula: 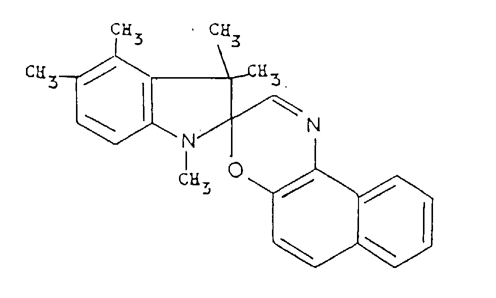 and the following sterically hindered amines (second component of the stabilizing mixture (iii)): 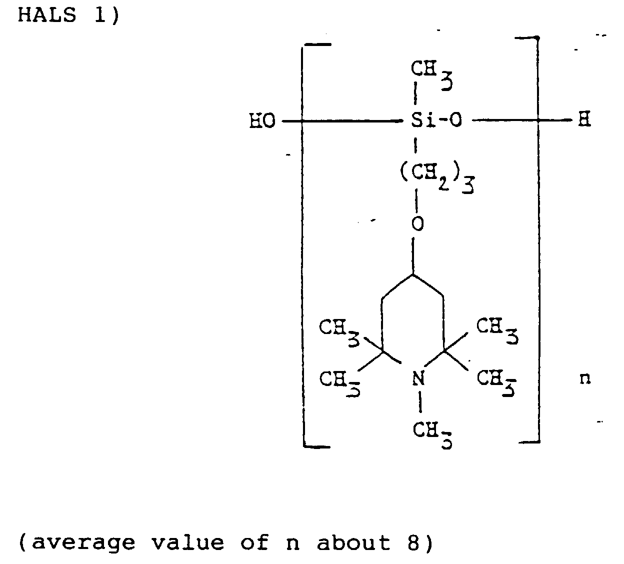 HALS 2) TINUVIN® 770 (see above).
These components are added to polypropylene and acrylic paint to obtain strips, films and photochromatic prints. The strips and films are obtained by injection moulding or extrusion whereas the paints are applied by screen printing on strips of white cotton and dried in an oven at 110°C for 10 minutes. The following characteristics of the photochromatic products thus obtained are determined:
   - UV-visible spectrum, determined with a Cary 2300 spectrophotometer, in absorbance on transparent or translucent materials such as film and polypropylene strips. The optical density measured at the wavelength of maximum absorption of the compound in its deactivated form is considered to be a measure of the concentration of the photochromatic compound in the sample.
   - Photochromatic activity estimated by determining the light reflectance variation (ΔR) at 23°C, carried out with a Gardner HAZEMETER XL 211 after activation for 15 seconds with a UV-A lamp having an irradiating power of 9 W/m². (For transparent materials this measurement is carried out by putting the test samples on white, reflecting cardboard).
   - Accelerated aging resistance, as measurement of the duration of the photochromatic activity over a period of time, determined with a Weather-0-Meter (WOM) Atlas equipped with a 6500 W Xenon lamp with continuous irradiation, operating at a temperature of 63°C on a black reference panel and with a relative humidity of 50%. The aging resistance is calculated by measuring,after different times of exposure to the WOM, the optical density values at λ max of the deactivated form (if possible) and the residual ΔR after activation with a UV-A lamp.

### EXAMPLE 1

6 compositions are prepared (Nos. 1-6 in Table 1), composed of Moplen® FLF 20 polypropylene (HIMONT) with a fluidity degree of 11, photochromatic compound A, HALS 1 and 1,4-diazabicyclo-[2.2.2]octane (DABCO). The amounts of said components are given in parts by weight.

**Table 1**

| Composition No. | 1 | 2 | 3 | 4 | 5 | 6 |
|---|---|---|---|---|---|---|
| FLF 20 | 100 | 100 | 100 | 100 | 100 | 100 |
| Compound A | 0.1 | 0.1 | 0.1 | 0.1 | 0.1 | 0.1 |
| HALS 1 | 0.25 | - | - | 0.25 | 0.25 | 0.25 |
| DABCO | - | 0.25 | 2 | 0.25 | 0.5 | 2 |

Compositions Nos. 1, 2 and 3 are to be considered comparative compositions as only the sterically hindered amine is present in composition No.1, whereas compositions No. 2 and 3 only contain DABCO in two different amounts.

The compositions thus prepared are transformed into 1 mm thick strips, by means of injection moulding at a temperature of 220°C. The optical density (referred to the deactivated form) and photochromatic activity (expressed as ΔR) related to the aging time in the WOM, are shown in Table 2.

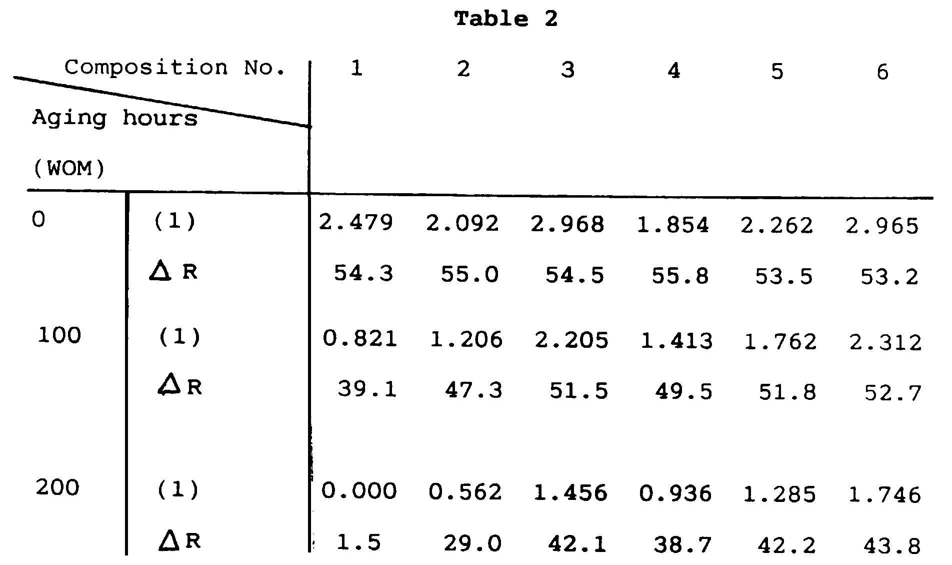

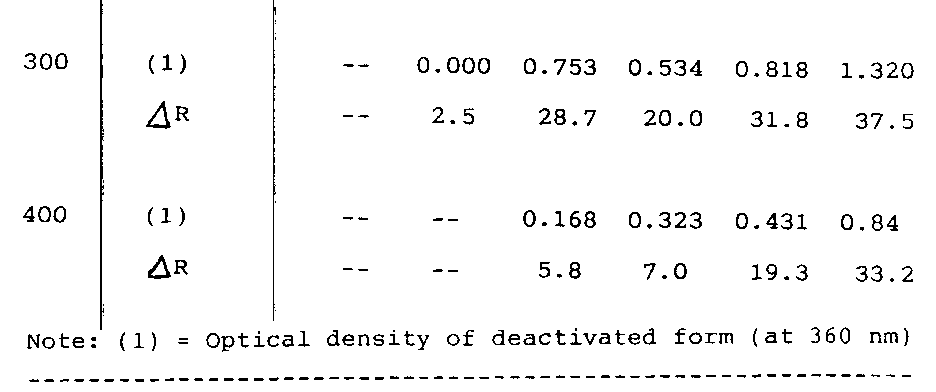

The data given in Table 2 clearly show the stabilizing effect of the sterically hindered amine-DABCO mixture, according to the present invention. In particular, a comparison between compositions No. 1, 2 and 4 and between compositions No. 1, 3 and 6, shows that compositions No. 4 and 6, respectively, give better results with respect to aging resistance. Moreover, when compositions No. 4, 5 and 6 in which the quantity of sterically hindered amine is constant whereas the percentage of DABCO increases are compared, it can be seen that by increasing the amount of DABCO, a further improvement in the stability can be obtained.

### EXAMPLE 2

Compositions No. 7 and 10 (Table 3) are prepared, composed of acrylic paint with added carboxymethyl cellulose (TEXILAC® 167200 - a commercial product of MONOUKIAN), photochromatic compound B, HALS 2 and DABCO.

Compositions No. 7, 8 and 9 without the stabilizing mixture of the present invention, are used as comparisons. The amounts of components are given in parts by weight.

**Table 3**

| Composition No. | 7 | 8 | 9 | 10 |
|---|---|---|---|---|
| TEXILAC® | 100 | 100 | 100 | 100 |
| Compound B | 1 | 1 | 1 | 1 |
| HALS 2 | - | 1 | - | 1 |
| DABCO | - | -- | 1 | 1 |
| Toluene | 10-15 | 10-15 | 10-15 | 10-15 |

The paints thus obtained are screen printed on white cotton strips and then dried in an oven at 110°C for 10 minutes. Table 4 below shows the stability results obtained with these paints. In this case aging was determined by measuring the photochromatic activity by means of reflectancy variation measurements (ΔR).

**Table 4**

| Composition No. | 7 | 8 | 9 | 10 |
|---|---|---|---|---|
| ΔR no aging | 28.9 | 27.1 | 27.8 | 28.3 |
| ΔR 20 h WOM | 16.5 | 19.1 | 23.4 | 25.4 |
| ΔR 40 h WOM | 3.8 | 9.0 | 11.8 | 16.2 |
| ΔR 60 h WOM | 0.0 | 2.2 | 0.5 | 8.8 |

From Table 4 it can be clearly seen that in composition No. 10 the stabilizing effect is much higher than it is in the comparative compositions (Nos. 7, 8 and 9).

### EXAMPLE 3

Using the same procedure as in example 2, compositions No. 11 to 14 (Table 5) are prepared using photochromatic compound C, HALS 2 and DABCO. Compositions No. 11, 12 and 13 are used as comparisons.

**Table 5**

| Composition No. | 11 | 12 | 13 | 14 |
|---|---|---|---|---|
| TEXILAC® | 100 | 100 | 100 | 100 |
| Compound C | 1 | 1 | 1 | 1 |
| HALS 2 | - | 1 | - | 1 |
| DABCO | - | - | 1 | 1 |
| Toluene | 10-15 | 10-15 | 10-15 | 10-15 |

The above compositions are transformed into prints by screen printing and are evaluated in the same way as in example 2. The results obtained, shown in Table 6 below, demonstrate that composition No. 14 which contains the stabilizing mixture of the present invention, has the best aging resistance.

**Table 6**

| Composition No. | 11 | 12 | 13 | 14 |
|---|---|---|---|---|
| ΔR no aging | 39.1 | 40.0 | 40.5 | 40.4 |
| ΔR 20 h WOM | 30.0 | 32.2 | 34.8 | 36.8 |
| ΔR 40 h WOM | 12.1 | 20.0 | 18.2 | 28.2 |
| ΔR 60 h WOM | 1.8 | 4.6 | 4.2 | 22.0 |

## Claims

1. Stabilizing mixture for compounds having photochromatic activity, comprising (a) a cyclic amine selected from 1,4-diaza-bicyclo-[2.2.2]octane (DABCO), quinuclidine and derivatives thereof and (b) at least one sterically hindered amine (HALS).

2. Mixture according to claim 1, wherein the weight ratio (a):(b) ranges from 20:1 to 0.5:1, particularly from 10:1 to 1:1.

3. Mixture according to any one of the preceding claims, wherein component (b) is selected from compounds having one of the following formulae VIII to XIII and particularly is a compound of formula VIII

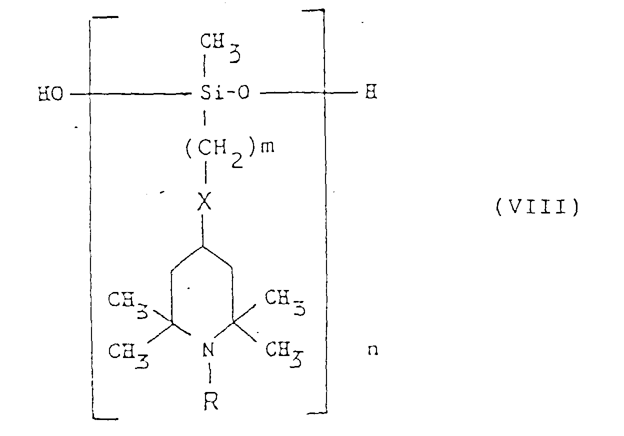

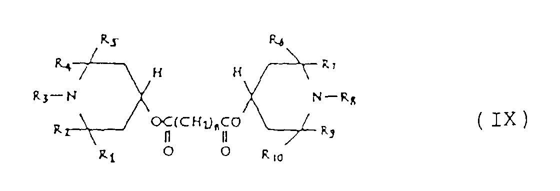

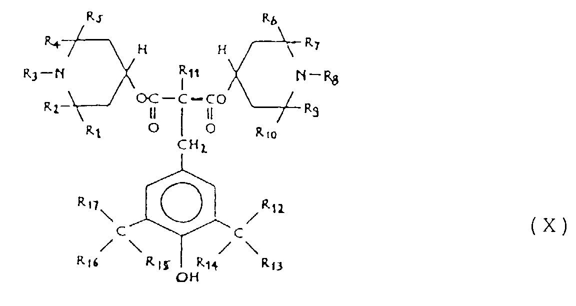

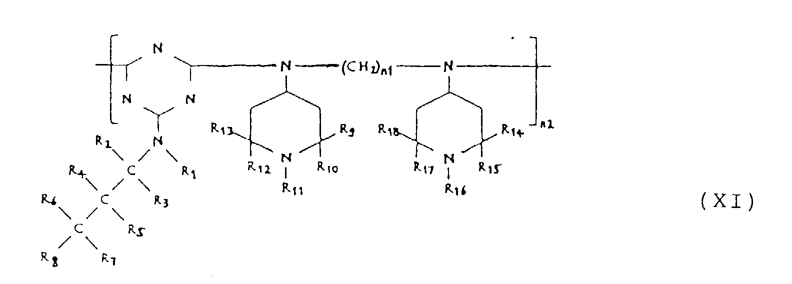

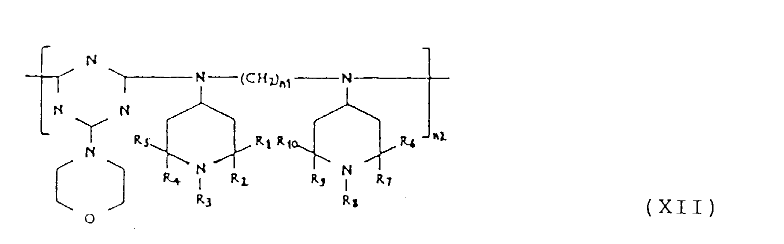

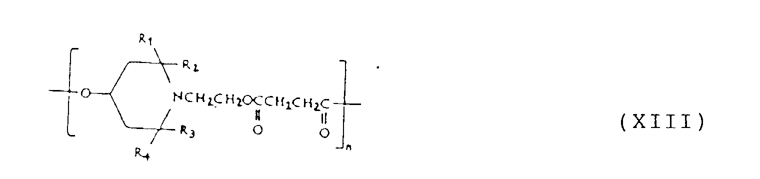

4. Mixture according to claim 3, in which the sterically hindered amine is one of formula VIII wherein X is oxygen, m is 3, R is methyl and n has an average value of 8.

5. Photochromatic composition having a long-lasting activity, containing at least one photochromatic compound and a stabilizing mixture according to any one of claims 1 to 4.

6. Composition according to claim 5, wherein the weight ratio of stabilizing mixture to photochromatic compound(s) ranges from 0.5:1 to 50:1, particularly from 2:1 to 25:1.

7. Composition according to any one of claims 5 and 6, wherein the photochromatic compound is selected from those having one of the formulae (A), (B) and (C) 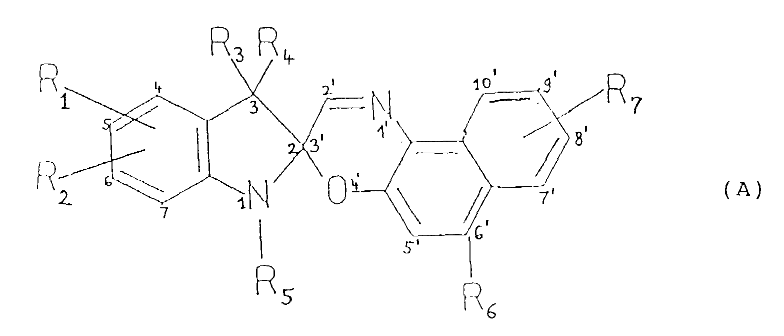 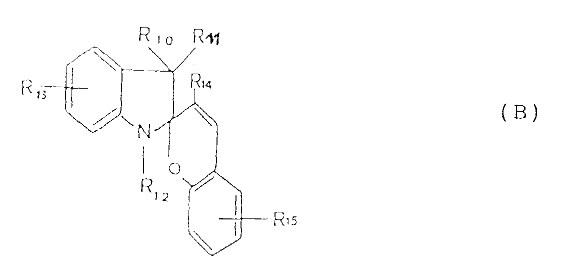 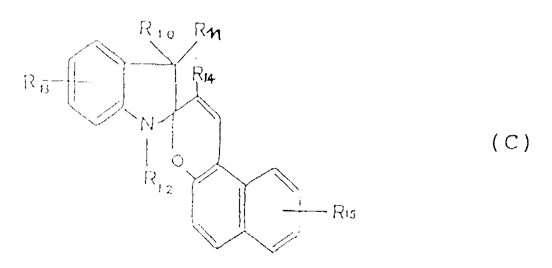 particularly those having one of the following formulae (I) to (VII)

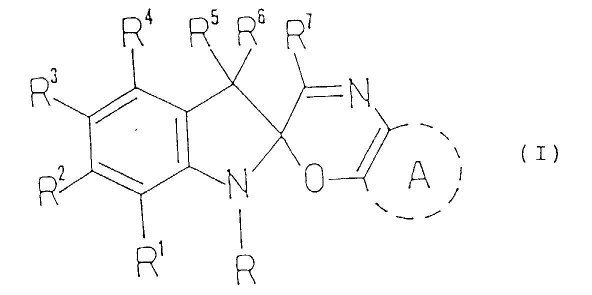

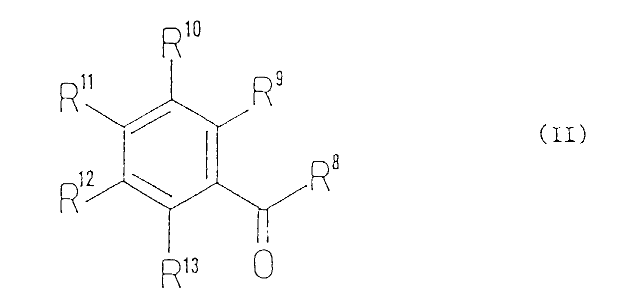

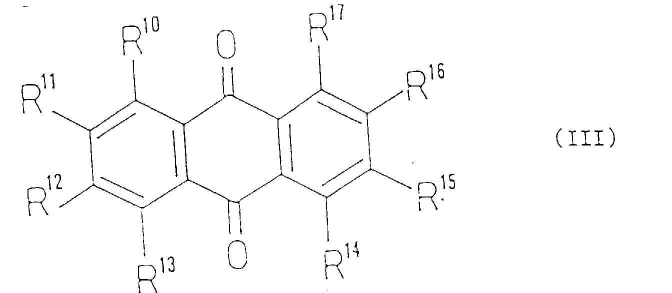

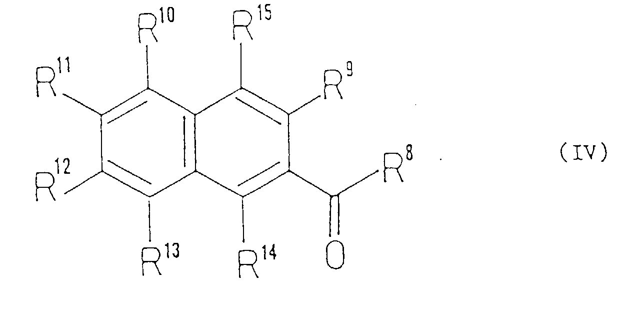

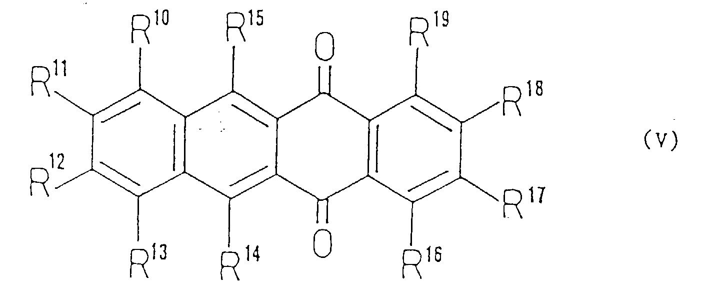

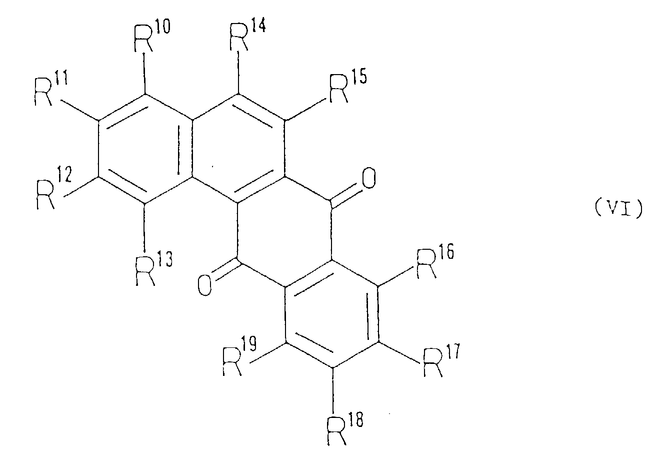

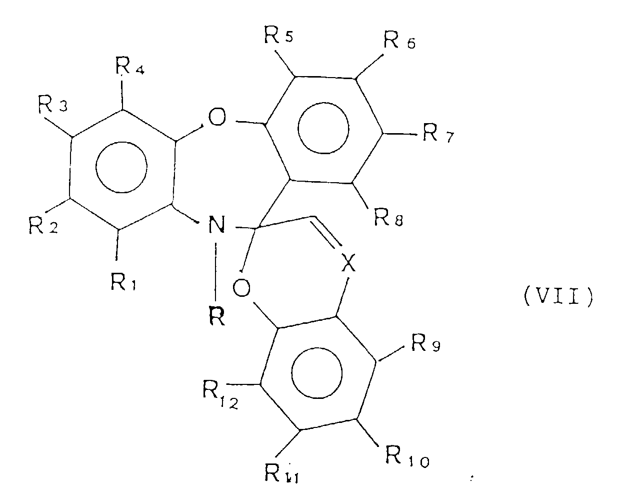

8. Polymeric composition, comprising one or more organic polymers and a photochromatic composition according to any one of claims 5 to 7.

9. Composition according to claim 8, wherein the photochromatic compound is present in amounts of from 0.01 to 3 parts by weight per 100 parts by weight or organic polymer.

10. Composition according to any one of claims 8 and 9, wherein the organic polymer is selected from polyethylene, polypropylene, polyvinylchloride, plasticized polyvinylchloride, ethylene-vinylacetate copolymers, polyvinylacetate, cellulose acetate, cellulose butyrate, (meth)acrylic resins, polystyrene, polycarbonate, polyamides, linear polyesters, and mixtures thereof.

11. Manufactured articles, made of polymeric compositions according to any one of claims 8 to 10.

## Patentansprüche

1. Stabilisierungsmischung für Verbindungen mit photochromatischer Aktivität, welche (a) ein cyclisches Amin, ausgewählt aus 1,4-Diazabicyclo-[2.2.2]octan (DABCO), Chinuclidin und deren Derivaten, und (b) mindestens ein sterisch gehindertes Amin (HALS) umfaßt.

2. Mischung gemäß Anspruch 1, wobei das Gewichtsverhältnis (a):(b) von 20:1 bis 0,5:1, insbesondere von 10:1 bis 1:1 reicht.

3. Mischung gemäß einem der vorhergehenden Ansprüche, wobei die Komponente (b) aus Verbindungen mit einer der folgenden Formeln VIII bis XIII ausgewählt ist und insbesondere eine Verbindung der Formel VIII ist

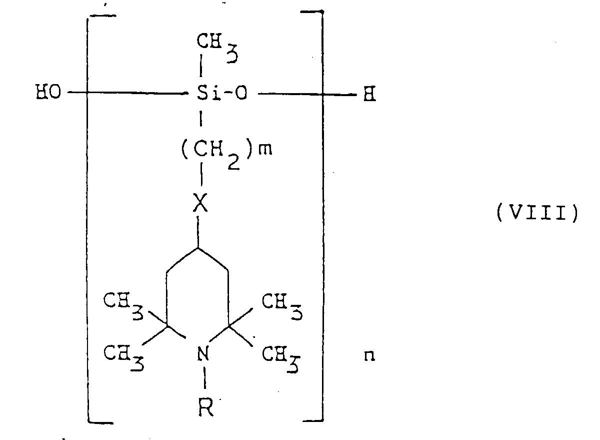

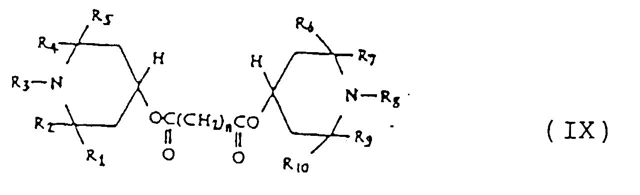

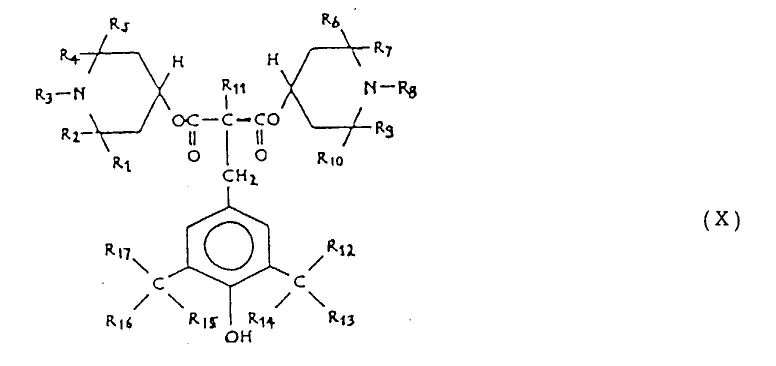

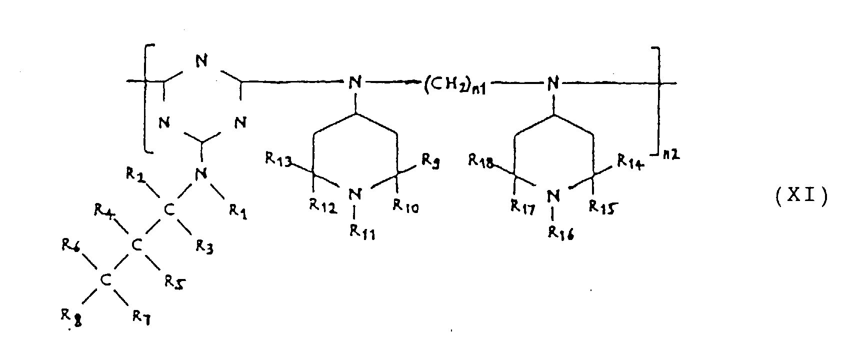

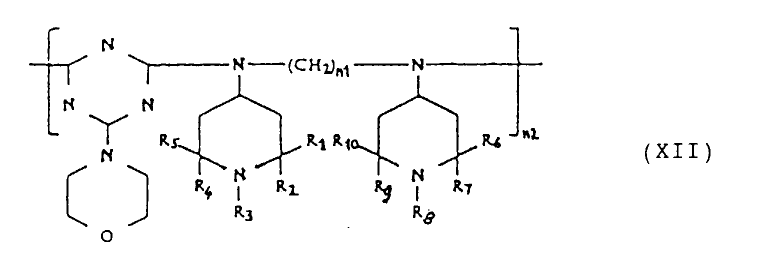

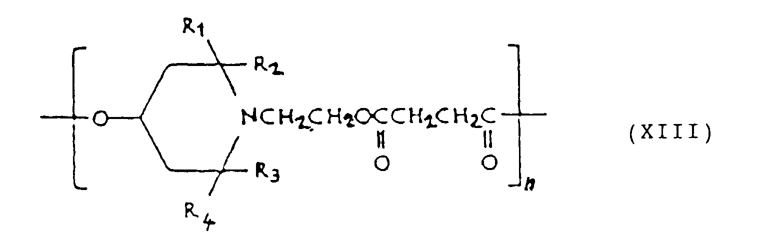

4. Mischung gemäß Anspruch 3, in welcher das sterisch gehinderte Amin eines der Formel VIII ist, wobei X Sauerstoff ist, m gleich 3 ist, R Methyl ist und n einen mittleren Wert von 8 besitzt.

5. Photochromatische Zusammensetzung mit einer langandauernden Aktivität, welche mindestens eine photochromatische Verbindung und eine Stabilisierungsmischung gemäß einem der Ansprüche 1 bis 4 enthält.

6. Zusammensetzung gemäß Anspruch 5, wobei das Gewichtsverhältnis von Stabilisierungsmischung zu photochromatischer Verbindung(en) von 0,5:1 bis 50:1, insbesondere von 2:1 bis 25:1 reicht.

7. Zusammensetzung gemäß einem der Ansprüche 5 und 6, wobei die photochromatische Verbindung ausgewählt ist aus jenen mit einer der Formeln (A), (B) und (C) 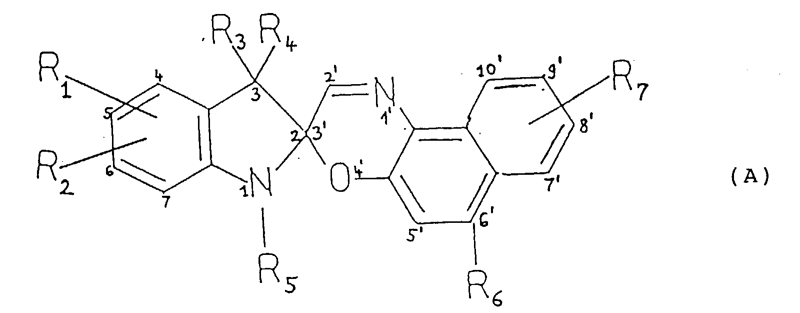 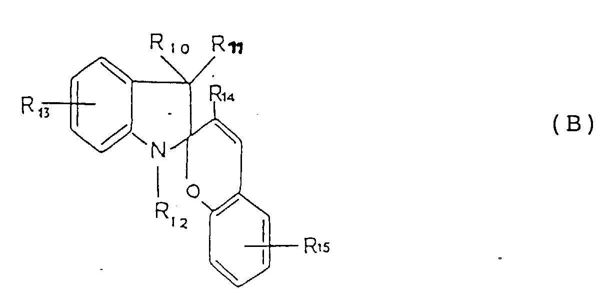 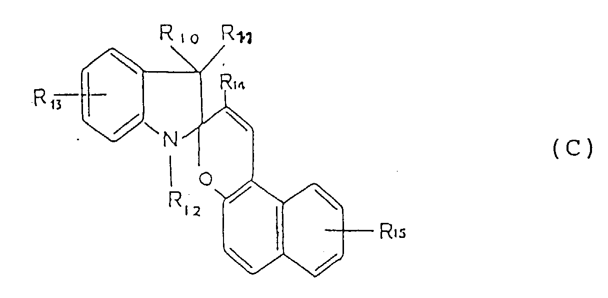 insbesondere jenen mit einer der folgenden Formeln (I) bis (VII)

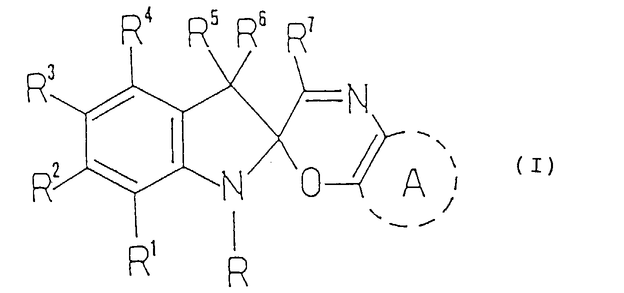

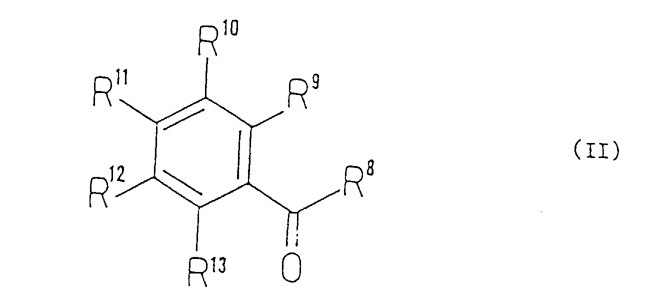

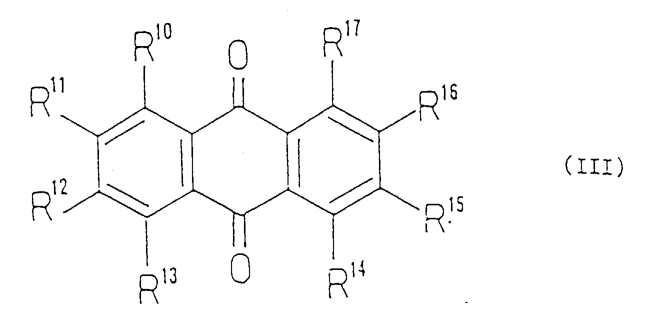

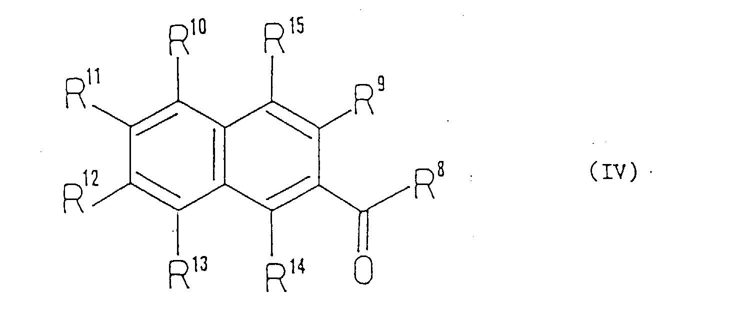

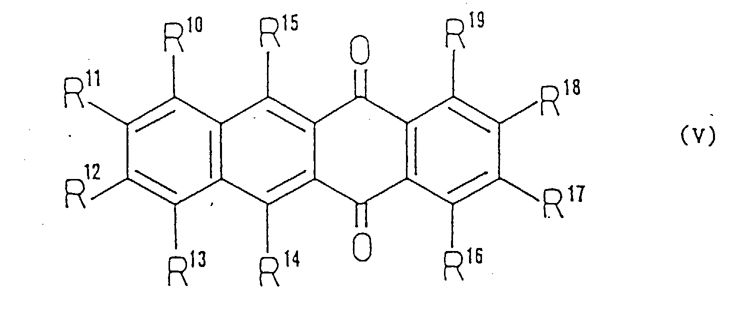

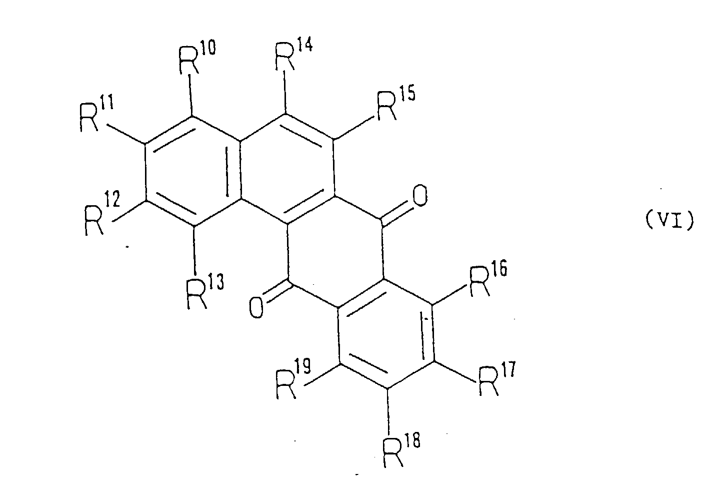

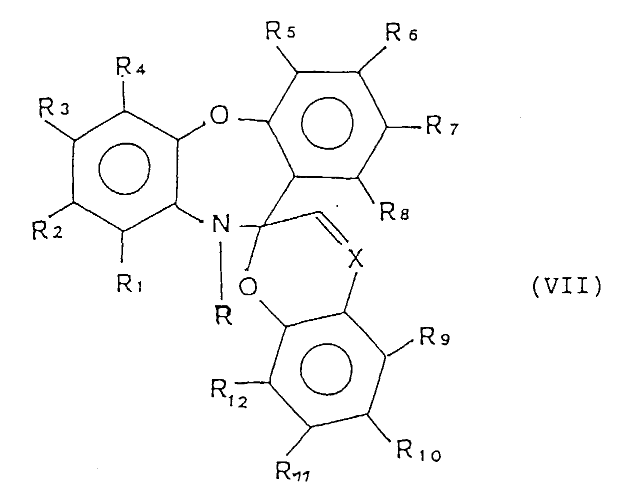

8. Polymerzusammensetzung, welche eine oder mehrere organische Polymere und eine photochromatische Zusammensetzung gemäß einem der Ansprüche 5 bis 7 umfaßt.

9. Zusammensetzung gemäß Anspruch 8, wobei die photochromatische Verbindung in Mengen von 0,01 bis 3 Gewichtsteile pro 100 Gewichtsteile an organischem Polymer vorhanden ist.

10. Zusammensetzung gemäß einem der Ansprüche 8 und 9, wobei das organische Polymer ausgewählt ist aus Polyethylen, Polypropylen, Polyvinylchlorid, weichmacherhaltigem Polyvinylchlorid, Ethylen-Vinylacetat-Copolymeren, Polyvinylacetat, Celluloseacetat, Cellulosebutyrat, (Meth)acrylharzen, Polystyrol, Polycarbonat, Polyamiden, linearen Polyestern und deren Mischungen.

11. Künstlich hergestellte Artikel, welche aus Polymerzusammensetzungen gemäß einem der Ansprüche 8 bis 10 hergestellt sind.

## Revendications

1. Mélange stabilisant pour des composés présentant une activité photochromique, comprenant (a) une amine cyclique choisie parmi le 1,4-diaza-bicyclo[2.2.2]octane (DABCO), la quinuclidine et des dérivés de ces derniers, (b) au moins une amine à encombrement stérique (HALS).

2. Mélange conforme à la revendication 1, dans lequel le rapport pondéral (a):(b) se situe dans l'intervalle allant de 20:1 à 0,5:1, en particulier dans l'intervalle allant de 10:1 à 1:1.

3. Mélange conforme à l'une quelconque des précédentes revendications, dans lequel le composant (b) est choisi parmi les composés répondant à l'une des formules suivantes VIII à XIII, et particulièrement c'est un composé répondant à la formule VIII :

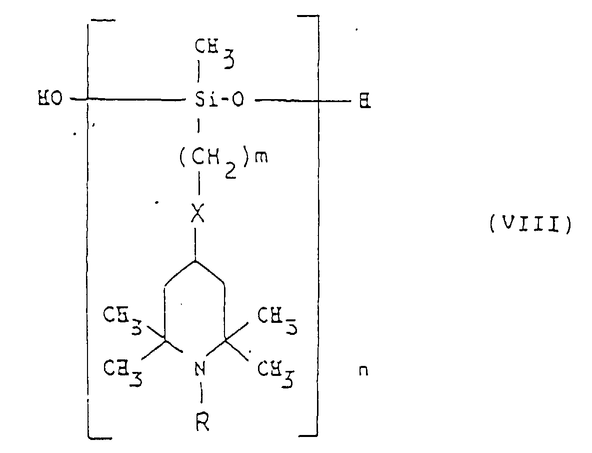

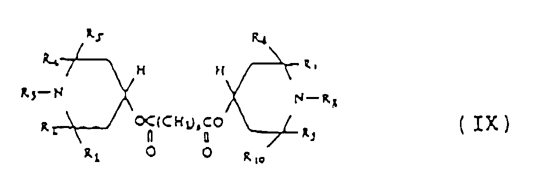

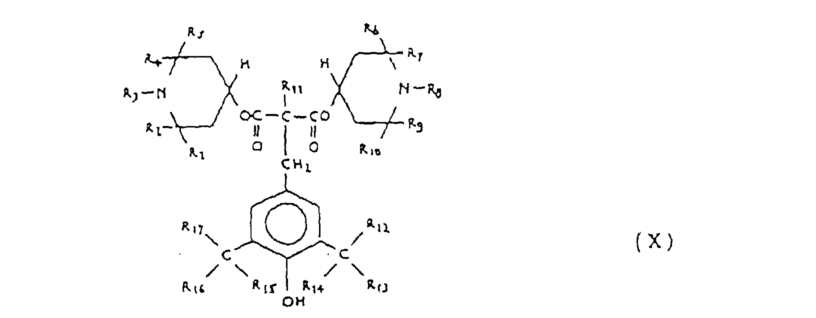

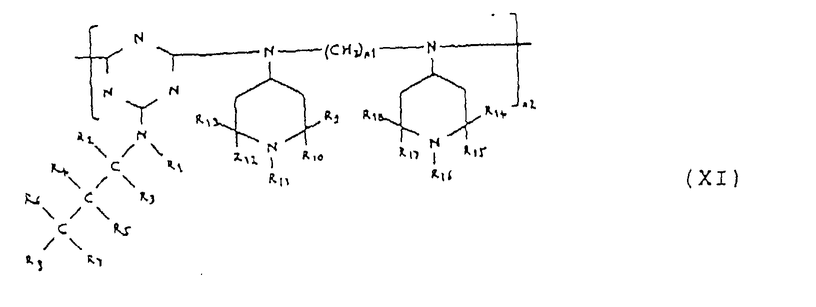

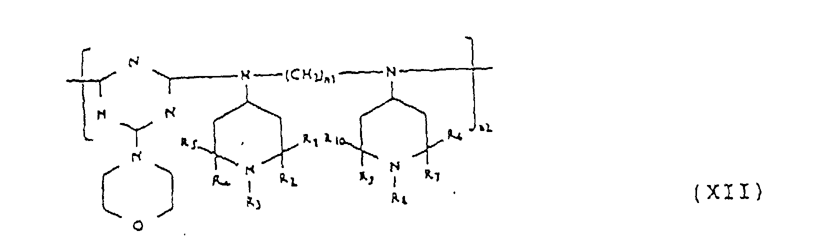

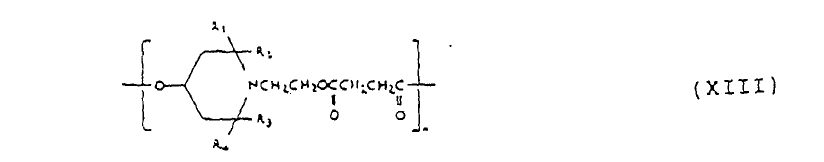

4. Mélange conforme à la revendication 3, dans lequel l'amine à encombrement stérique est une amine répondant à la formule VIII dans laquelle X représente un atome d'oxygène, m vaut 3, R représente un groupe méthyle et n a une valeur moyenne de 8.

5. Composition photochromique présentant une activité de longue durée, contenant au moins un composé photochromique et un mélange stabilisant conforme à l'une quelconque des revendications 1 à 4.

6. Composition conforme à la revendication 5, dans laquelle le rapport pondéral du mélange stabilisant au(x) composé(s) photochromique(s) se situe dans l'intervalle allant de 0,5:1 à 50:1, en particulier dans l'intervalle allant de 2:1 à 25:1.

7. Composition conforme à l'une quelconque des revendications 5 et 6, dans laquelle le composé photochromique est choisi parmi ceux répondant à l'une des formules (A), (B) et (C) 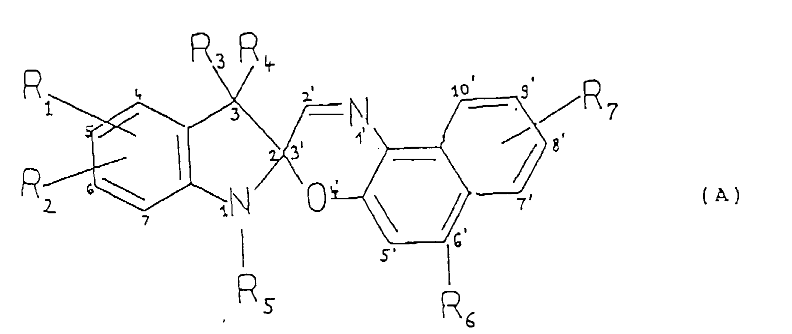 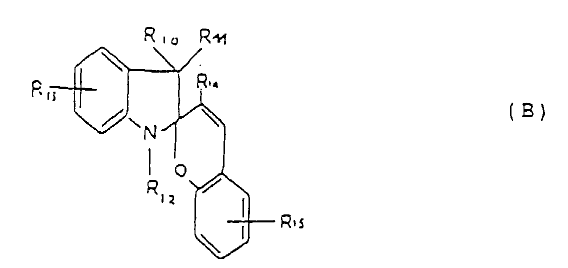 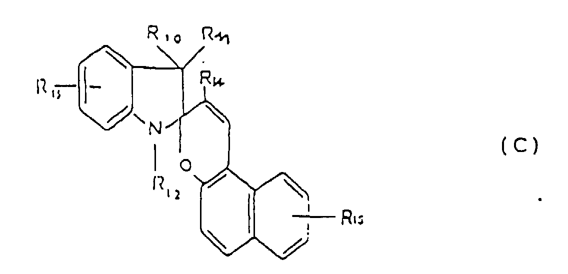 en particulier parmi ceux répondant à l'une des formules suivantes (I) à (VII) :

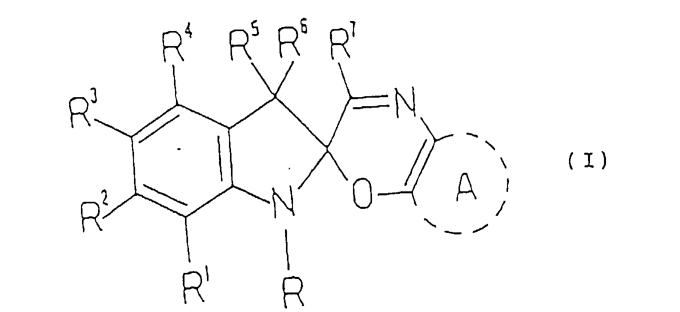

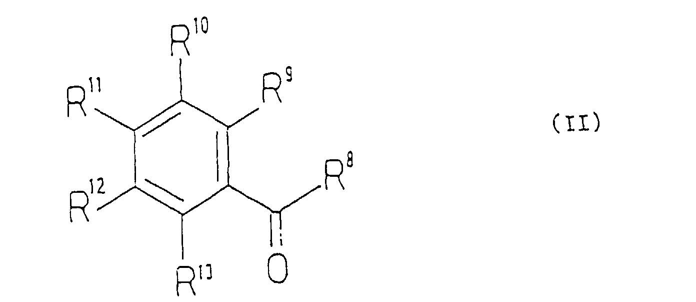

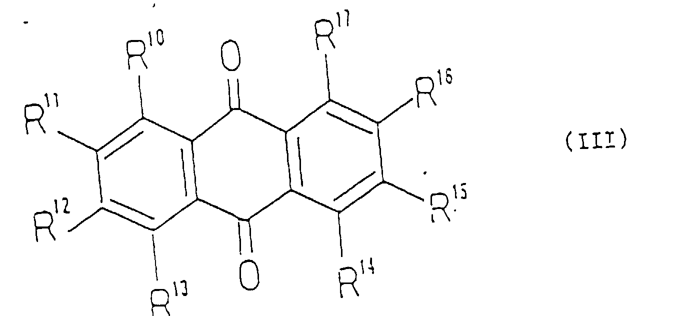

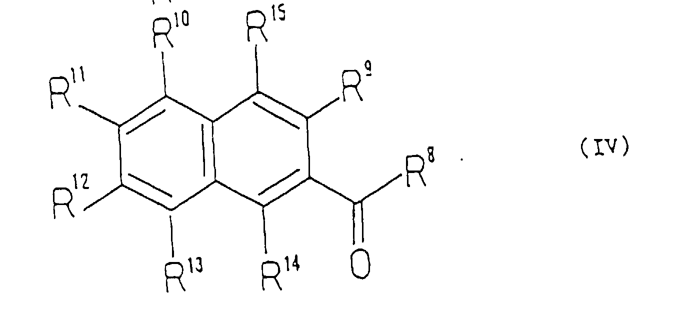

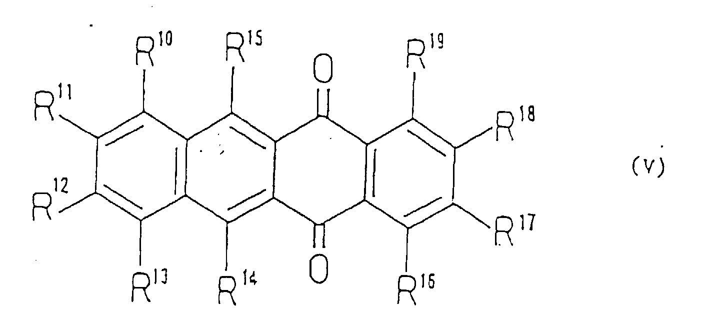

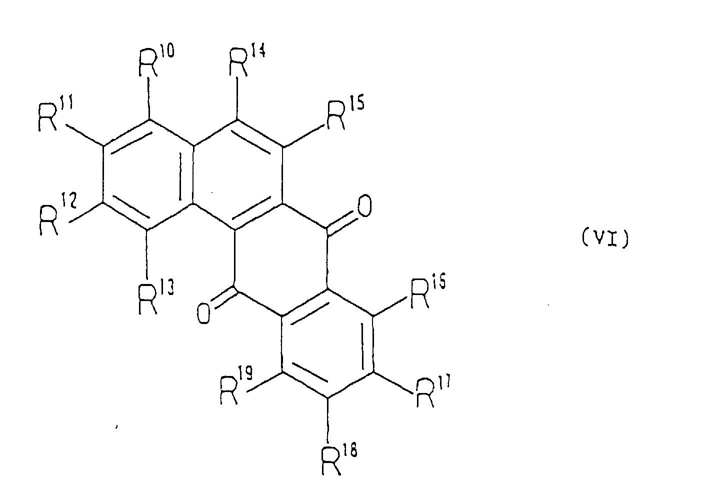

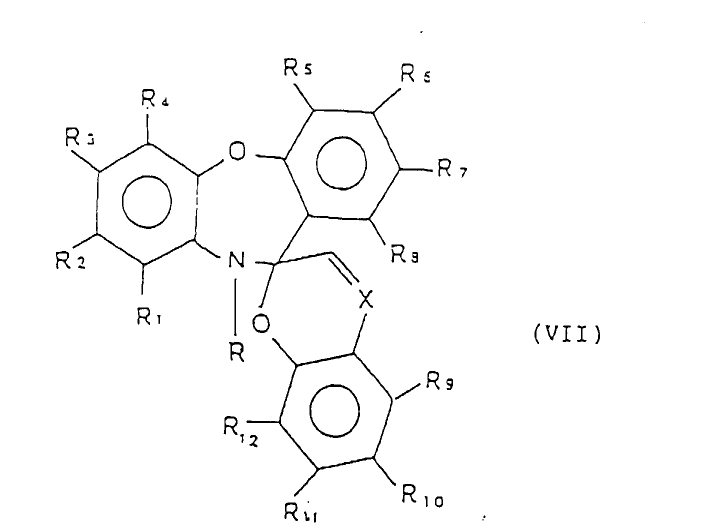

8. Composition polymérique comprenant un ou plusieurs polymères organiques et une composition photochromique conforme à l'une quelconque des revendications 5 à 7.

9. Composition conforme à la revendication 8, dans laquelle le composé photochromique est présent en des quantités allant de 0,01 à 3 parties en poids pour 100 parties en poids de polymère organique.

10. Composition conforme à l'une quelconque des revendications 8 et 9, dans laquelle le polymère organique est choisi parmi le polyéthylène, le polypropylène, le poly(chlorure de vinyle), le poly(chlorure de vinyle) plastifié, les copolymères éthylène/acétate de vinyle, le poly(acétate de vinyle), l'acétate de cellulose, le butyrate de cellulose, les résines (méth)acryliques, le polystyrène, le polycarbonate, les polyamides, les polyesters linéaires, et leurs mélanges.

11. Articles fabriqués en compositions polymériques conformes à l'une quelconque des revendications 8 à 10.
